# EUROPÄISCHE PATENTSCHRIFT

(11) **EP 0 503 028 B1**
(45) Veröffentlichungstag und Bekanntmachung des Hinweises auf die Patenterteilung: **14.12.1994**
(21) Anmeldenummer: 91916705.6
(22) Anmeldetag: 24.09.1991
(51) Int. Cl.: B01D 29/07, B01D 27/06, B01D 29/21

(54) **FILTER ZUM FILTERN VON GASFÖRMIGEN UND FLÜSSIGEN MEDIEN**
FILTER FOR FILTERING GASEOUS AND LIQUID MEDIA
FILTRE POUR LA FILTRATION DE MILIEUX GAZEUX ET LIQUIDES

(30) Priorität: 25.09.1990 DE 4030304
(43) Veröffentlichungstag der Anmeldung: 16.09.1992
(73) Patentinhaber: TRABOLD, Hermann, 97877 Wertheim (DE)
(72) Erfinder: TRABOLD, Hermann, 97877 Wertheim (DE)
(74) Vertreter: Haft, von Puttkamer, Berngruber, Czybulka
(86) Internationale Anmeldenummer: DE9100755
(87) Internationale Veröffentlichungsnummer: WO9204960

(56) Entgegenhaltungen:
- WO-A-90/06799
- FR-A- 1 139 118
- GB-A- 2 106 410
- US-A- 2 750 048

## Beschreibung

Die Erfindung bezieht sich auf einen Filter zum Filtern von gasförmigen und flüssigen Medien, insbesondere auf einen Ölfilter für Verbrennungsmotoren gemäß dem Oberbegriff des Patentanspruches 1.

Aus der DE-C-1 051 062 ist ein derartiger Filter bekannt, bei dem die Filterpackung eine Rolle aus Saugpapier ist, die auf einem zentralen Kern aufgesteckt ist. Der bekannte Filter kann z.B. als Ölfilter für Verbrennungsmotoren verwendet werden. Derartige Ölfilter arbeiten als Feinfilter und können z.B. in einem Nebenstrom des Ölflusses angeordnet, d.h. zusätzlich zu einem vorhandenen Ölfilter eingesetzt werden. Durch diese Feinfilterung braucht das Öl praktisch nicht ausgewechselt, sondern nur der tatsächlich verbrauchte Anteil aufgefüllt zu werden. In jedem Falle lassen sich die Betriebszeiten wesentlich steigern.

Bei dem bekannten Filter durchströmt die Flüssigkeit die Papierfilterpackung zwischen Zu- und Ablauf im Gegenstrom. Auch andere Funktionsprinzipien sind bekannt, z.B. eine radiale Durchströmung gemäß der DE-C-24 60 073 oder eine im Gleichstrombetrieb, so z.B. für einen Benzinfilter gemäß der DE-A-36 17 420, wo der Kraftstoff die gewickelte Filterpackung axial durchströmt.

Aus der DE-A-38 42 017 ist ferner ein Ölfilter bekannt, der baukastenartig aufzubauen ist, so daß ein Ölfilter auch mit mehreren Filterpackungen zusammengebaut werden kann und sich das Volumen der Filterpackung auf die Gesamtmenge des umzuwälzenden Öles leicht anpassen läßt.

Ein Problem bei derartigen Filtern, bei denen die Filterpackungen aus einem Saugpapier entweder als Wickel oder in einzelnen Schichten bzw. aus einem anderen porösen schwammartigen, jedoch verformbaren Material aufgebaut sind, besteht darin, daß die Filterpackung dem Druck der diese durchströmenden Flüssigkeit standhalten muß. Insbesondere dann, wenn mit viskoseren Flüssigkeiten, so z.B. Schmieröl, gearbeitet wird, und bereits ein Teil der Filterpackung durch ausgefilterten Schmutz zugesetzt ist, wird der Durchflußwiderstand so groß, daß sich die Poren des Filtermateriales bis hin zur Undurchlässigkeit verpressen. Bei Filterpackungen aus Saugpapierwickeln können die Filterpackungen bis zu 30 % und mehr zusammengedrückt werden. Durch die Verformung sind die Standzeiten derartiger Filterpackungen beschränkt. Für herkömmliche Ölfilter von Verbrennungsmotoren von Kraftfahrzeugen wird z.B. ein Wechsel der Filterpackungen alle 5000 bis 10 000 Fahrkilometer empfohlen.

Derartige Filterpackungen könnten im Prinzip auch zur Filterung von gasförmigen Medien, so z.B. zur Luftfilterung verwendet werden. Auch hier würden jedoch die gleichen Probleme wie oben geschildert auftreten, so daß ein vorzeitiges Zusetzen der Luftfilter die Folge wäre.

Der Erfindung liegt die Aufgabe zugrunde, derartige Filter so zu modifizieren, daß der Durchflußwiderstand über die Standzeit stets so gehalten wird, daß eine glatte Durchströmung des Mediums bei hoher Filterwirkung gewährleistet und damit die Standzeit verlängert wird.

Diese Aufgabe wird gemäß der Erfindung durch die im kennzeichnenden Teil des Patentanspruches 1 angegebenen Merkmale gelöst.

Demgemäß besteht der Gedanke der Erfindung darin, die poröse und verformbare Filterpackung während des Betriebes formstabil zu halten und zum anderen in ihrer Lage in dem Filtergehäuse durch Stabilisierungselemente zu fixieren. Durch derartige Stabilisierungselemente wird der Preßdruck der Flüssigkeit auf die Filterpackung weitgehend aufgehoben, da hierdurch die Filterpackung im wesentlichen nur auf Zug belastet wird und nicht auf Druck, wie dieses bei herkömmlichen Filtern der in Rede stehenden Art passiert. Die Stabilisierungselemente sind jeweils zumindest im Bereich der Eintrittsfläche der Flüssigkeit gelegen und z.B. quer zur Strömungsrichtung angeordnete Stäbe. Diese Stäbe durchdringen, sofern die Filterpackung ein Papierwickel oder eine Anordnung aus einer Vielzahl von Papierschichten ist, sämtliche Papierschichten. Diese Papierschichten werden durch die Fixierung der Filterpackung in dem Filtergehäuse nicht nochmals verpreßt.

Um Filterpackungen, z.B. die erwähnten Papierwickel, optimal zu nutzen, ist es von Vorteil, die Flüssigkeit radial und axial zu filtern. Dabei kann das Gleichstromprinzip oder das Gegenstromprinzip angewendet werden.

Mit einem Filter gemäß der Erfindung, der als Ölfilter für Verbrennungsmotoren von Kraftfahrzeugen eingesetzt wird, werden normale Standzeiten um 20 000 Fahrkilometer erreicht. Die Filterpackungen brauchen im Vergleich zu herkömmlichen Ölfiltern nur halb so oft ausgewechselt zu werden. Unabhängig von dem zu filternden Medium werden somit die Standzeiten gegenüber herkömmlichen Konstruktionen wesentlich verlängert.

Weitere Ausgestaltungen der Erfindung gehen aus den Unteransprüchen hervor.

Die Erfindung ist in mehreren Ausführungsbeispielen anhand der Zeichnung näher erläutert. In der Zeichnung stellen dar:
- Fig. 1: einen Längsschnitt durch einen Filter gemäß der Erfindung mit einem Filtergehäuse und einer darin angeordneten in Form und Lage stabilisierten Filterpackung;
- Fig.2: eine Aufsicht auf das geöffnete Filtergehäuse des Filters gemäß Fig. 1 mit herausgenommener Filterpackung;
- Fig.3 bis 6: schematische Darstellungen von unterschiedlichen Ausführungsformen jeweils einer zylindrischen Filterpackung gemäß der Erfindung;
- Fig. 7: eine schematische Darstellung einer zylinderförmigen Filterpackung;
- Fig. 8: eine schematische Darstellung eines quaderförmigen Schichtenfilters;

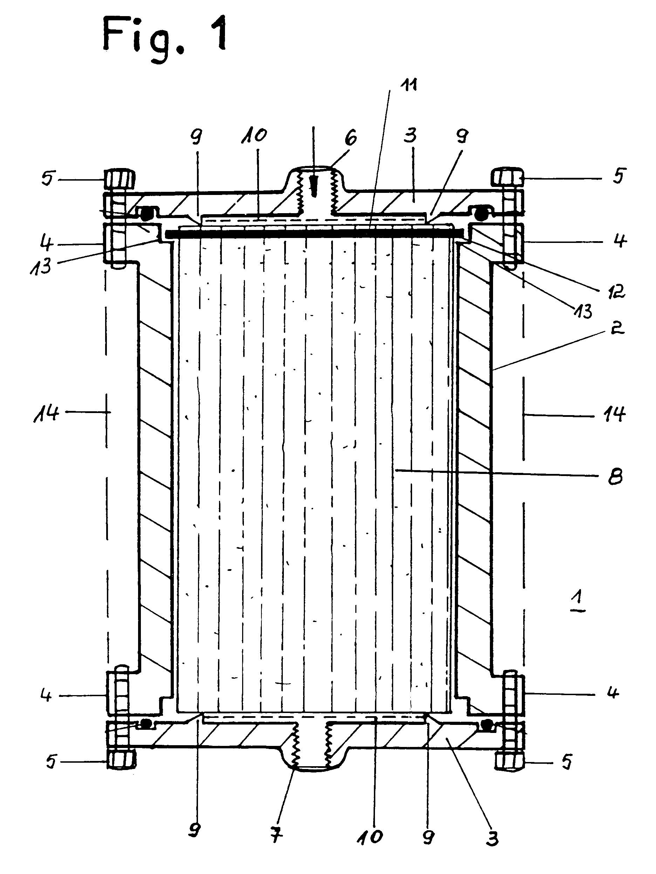

In Fig. 1 ist ein Ölfilter 1 dargestellt, das ein rohrförmiges Filtergehäuse 2 und zu beiden Seiten dieses Filtergehäuses jeweils einen Deckel 3 aufweist. Filtergehäuse 2 und Deckel 3 sind über Flansche 4 und Schrauben 5 miteinander verbunden. Im in Fig. 1 oberen Deckel 3 ist mittig ein Zulauf 6, im unteren Deckel mittig ein Ablauf 7 vorgesehen. In das Filtergehäuse ist eine Filterpackung 8 eingesetzt, die aus einem Saugpapier gewickelt ist. Zur Halterung der Filterpackung 8 ist ziemlich am Rand des Deckels jeweils eine umlaufende Schneide 9 vorgesehen, die mit ihrer Spitze zwischen die Lagen des Saugpapieres der Filterpackung greift. Zusätzlich ist der Boden des Deckels innerhalb der umlaufenden Schneide 9 mit einem recht stabilen Drahtnetz 10 ausgefüllt, auf dem sich die Filterpackung zusätzlich abstützt.

Zum Filtern von Öl strömt das verschmutzte Öl über den Zulauf 6 in den Filter, wird durch das Drahtnetz 10 verteilt, tritt an der Oberseite, d.h. der Eintrittsfläche 11 in die Filterpackung 8, strömt längs durch die Filterpackung 8 und fließt aus dem Ablauf 7 aus dem Ölfilter hinaus, wie dieses durch den Pfeil in Fig. 1 angedeutet ist.

Um zu verhindern, daß die Filterpackung 8 durch das mit relativ hohem Druck in den Filter strömende Öl zusammengepreßt wird, ist im oberen, dem Zulauf 6 zugewandten Bereich der Filterpackung ein Stabilisierungsstab 12 vorgesehen, der durch eine Querbohrung durch sämtliche Lagen der Filterpackung hindurchgreift und an beiden Außenrändern der Filterpackung über diese hinausragt. Die hinausragenden Enden des Stabilisierungsstabes 12 stützen sich an einem Anschlag bzw. dem Boden einer Nut 13 an dem Filtergehäuse 2 ab. Wenn nun Öl in den Ölfilter einströmt, so wird die Filterpackung durch den Stabilisierungsstab in ihrer Lage in dem Filtergehäuse fixiert, so daß das durch die Filterpackung strömende Öl die Filterpackung im wesentlichen nur noch auf Zug belastet. Ein Zusetzen der Poren der Filterpackung und damit ein Verpressen der gesamten Filterpackung wird auf diese Weise verhindert.

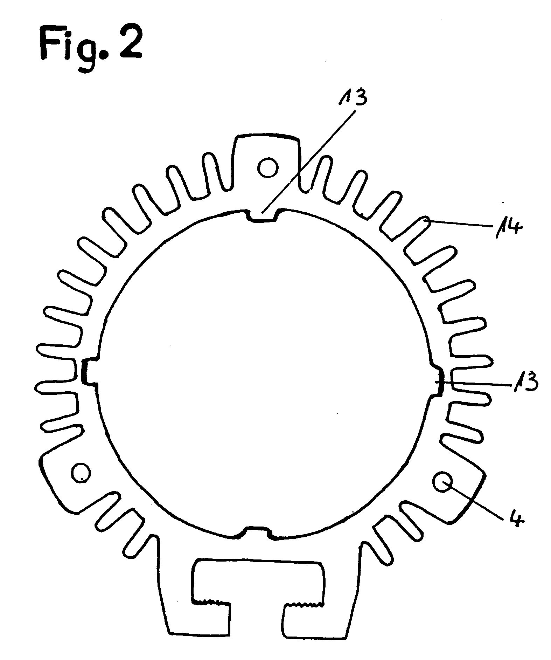

In Fig. 2 sind die Anschläge 13 bzw. Nuten deutlicher gezeigt. In dieser Figur sieht man auch, daß das Filtergehäuse Kühlrippen 14 aufweist.

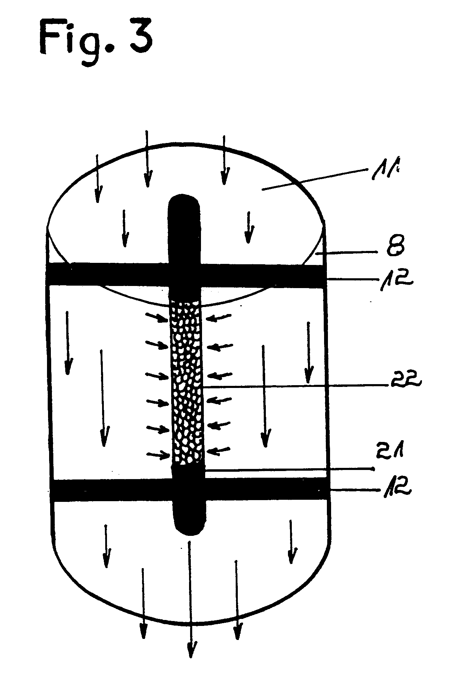

In Fig. 3 ist ebenfalls eine aus einem Papierstreifen gewickelte Filterpackung 8 gezeigt, wobei diese Filterpackung jedoch einen mittigen Kern 21 aufweist, der die Filterpackung in deren gesamter Länge durchsetzt. Der Kern 21 ist ein Rohr, welches innerhalb der Filterpackung über deren größte Länge mehrere Öffnungen 22 aufweist. Der Kern 21 ist an der Oberseite, hier wiederum der Eintrittsfläche 11 für das zu filternde Öl abgesperrt, am Boden der Filterpackung jedoch offen. Wiederum quer zur Strömungsrichtung an der Eintrittsfläche 11 ist mit dem Kern 21 ein die Filterpackung durchdringender Stabilisierungsstab 12 verbunden, ein weiterer Stabilisierungsstab ist ebenso an dem unteren Ende des Kernes vorgesehen. Bei dieser Ausführungsform ist es nicht notwendig, daß die Stabilisierungsstäbe über die Filterpackung hinausragen und sich an korrespondierende Anschläge in dem Filtergehäuse anlegen, da hier der Kern 21 die Fixierung der Stabilisierungsstäbe 12 übernimmt.

Ist die in Fig. 3 gezeigte Filterpackung 8 in einem Filter entsprechend Fig. 1 eingesetzt, so strömt das zu filternde Öl über die Eintrittsfläche 11 längs durch den Filter, wobei jedoch auch ein gewisser Anteil radial in Richtung auf den Kern 21 strömt, durch die Öffnungen 22 in diesen eintritt und am unteren Ende des Kernes wieder austritt. Die Strömung kann somit als axial/radial bezeichnet werden.

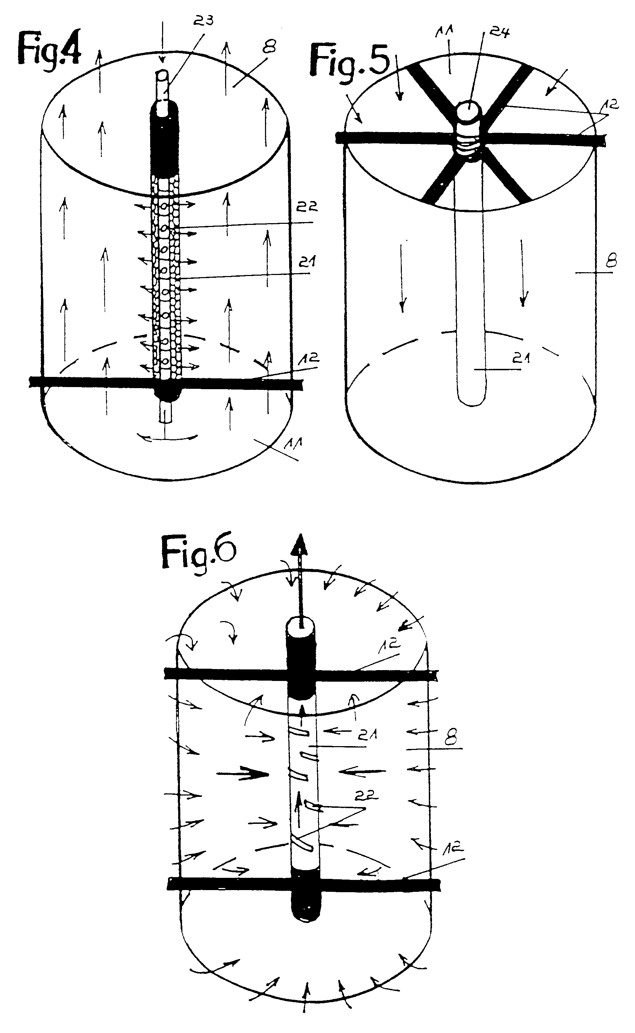

Die in Fig. 4 gezeigte zylindrische Filterpackung 8 aus einem Saugpapierwickel hat wiederum einen mittigen hohlen Kern 21, der auf der in diesem Falle unteren Eintrittsfläche 11 verschlossen ist. Der hohle Kern weist wiederum innerhalb der Filterpackung über einen Teil seiner Länge Öffnungen 22 auf; ferner ist durch den Hohlkern noch ein Standrohr 23 des Filtergehäuses geführt. Dieses Standrohr dient u.a. dazu, die Filterpackung in dem Filtergehäuse zentrisch zu halten. Außerdem ist es möglich, über dieses Standrohr noch Öl der Filterpackung zuzuführen, das dann aus dem hohlen Kern in die Filterpackung 8 radial strömt. Außerdem tritt das verschmutzte Öl am Boden der Filterpackung aus dem Standrohr 23 aus, wird dort, z.B. über ein Drahtnetz entsprechend Fig. 1, verteilt, tritt an der Unterseite der Filterpackung, die die Eintrittsfläche 11 ist, in die Filterpackung ein, durchströmt diese in Längsrichtung von unten nach oben und verläßt das Filtergehäuse an der Oberseite der Filterpackung. Bei einer solchen Ausführung sind demnach im oberen Deckel des Filters sowohl der Zu- als auch der Ablauf vorgesehen. Ebenfalls im Bereich der Eintrittsfläche ist mit dem Kern ein Stabilisierungsstab 12 verbunden, der diesmal über den äußeren Rand der Filterpackung hinausragt und, wie zu den Figuren 1 und 2 gezeigt, an entsprechenden Anschlägen 13 im Filtergehäuse fixiert wird.

In Fig. 5 ist wiederum eine zylindrische Filterpackung mit einem Kern 21 dargestellt. Am in diesem Falle oberen Ende dieses Kernes ist ein sternförmiges Muster aus mehreren dünnen flachen Stabilisierungsstäben 12 vorgesehen, wobei diese Stabilisierungsstäbe 12 mit der Oberseite der Filterpackung, d.h. der Eintrittsfläche 11 für das zu filternde Öl verbunden sind, z.B. geklebt oder geklammert sind. Mit diesen Stabilisierungsstäben kann noch koaxial zu dem Kern 21 eine Steckbefestigung 24 bzw. ein Gewinde vorgesehen sein, um die Filterpackung am Gehäuseboden bzw. einem Deckel des Ölfilters zu befestigen. Wie in Fig. 5 gezeigt, kann auch zumindest ein Stabilisierungsstab über den äußeren Rand der Filterpackung hinausragen, um die Filterpackung zusätzlich in ihrer Lage im Filtergehäuse zu fixieren.

In Fig. 6 ist eine zylindrische Filterpackung 8 mit einem hohlen Kern 21 dargestellt, der wiederum Öffnungen 22 aufweist und an seiner Oberseite offen ist. An beiden Enden des hohlen Kernes sind wiederum quer verlaufende Stabilisierungsstäbe 12 vorgesehen, die in diesem Falle über die Filterpackung hinausragen und somit zusätzlich noch an Anschlägen in dem Filtergehäuse gehalten werden können. Diese Konstruktion bietet bei einem massiven Wickel die größte nutzbare Filteroberfläche.

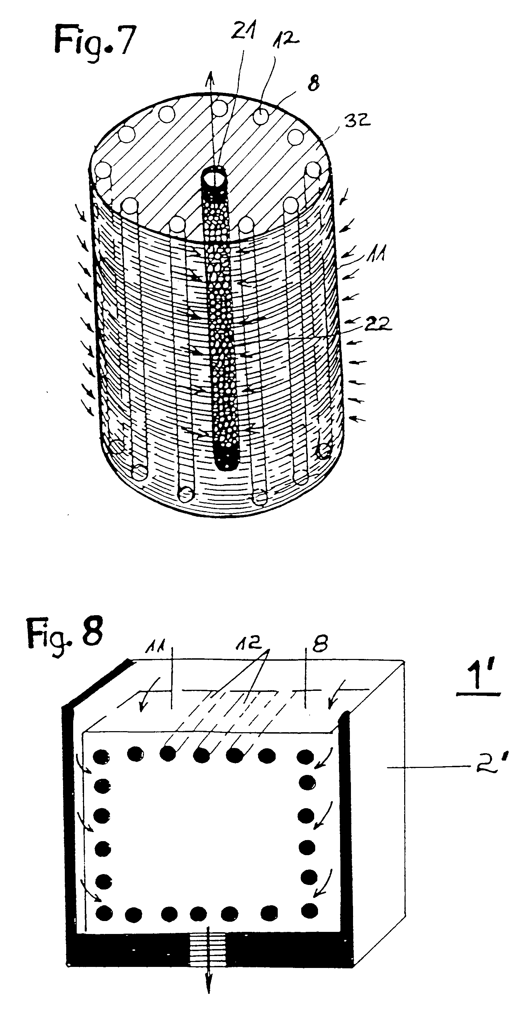

In Fig. 7 ist eine zylindrische Filterpackung 8 mit einem hohlen Kern 21 dargestellt. Die Ober- und Unterseite dieser Filterpackung sind für das zu filternde Medium wiederum nicht durchlässig, z.B. mit einer hier durch eine Schraffur angedeuteten Beschichtung 32 versehen. Der hohle Kern 21 hat über annähernd die gesamte Länge innerhalb der Filterpackung mehrere Öffnungen 22, so daß das von der Umfangsfläche, demnach der Eintrittsfläche 11, in die Filterpackung strömende Öl in den Kern 21 eintritt und aus der oberen Öffnung des Kernes ausströmt, wie durch die Pfeile angedeutet. Diese Filterpackung ist somit wiederum ein Radialfiltereinsatz, an dem die zu filternde Flüssigkeit an den Lagen entlang zur Mitte fließt.

Um auch bei hohen Drücken die Form und Lage der Filterpackung 8 zu fixieren, sind in Längsrichtung längs des Umfanges der Filterpackung 8 diese durchdringende Stabilisierungsstäbe 12 vorgesehen, wobei zumindest einige der Stabilisierungsstäbe auch aus der Ober- oder Unterseite der Filterpackung hinausragen können und an entsprechenden Anschlägen im Filtergehäuse fixiert werden.

In Fig. 8 ist ein Schichtenfilter 1' dargestellt. Dieser Schichtenfilter hat ein rechteckiges Filtergehäuse 2', das mit einem hier nicht gezeigten und den Zulauf aufnehmenden Deckel verschließbar ist. In dem Filtergehäuse 2' ist eine quaderförmige Filterpackung 8 gelegen, die aus einer Vielzahl von Saugpapierlagen besteht. Sämtliche Lagen werden zumindest an der hier oberen Eintrittsseite 11 durch quer verlaufende Stabilisierungsstäbe 12 durchdrungen, die an hier nicht gezeigten Anschlägen innerhalb des Filtergehäuses anliegen. Die Stabilisierungsstäbe sind hier längs der gesamten Peripherie der Filterpackung 8 angeordnet. Denkbar ist es, lediglich die Stabilisierungsstäbe 12 an der Oberseite der Filterpackung 8' vorzusehen, wenn Öl praktisch nicht von den Außenseiten in die Filterpackung hereinströmt. Ist dieses der Fall, wie in Fig. 8 durch die Pfeile angedeutet, dann sollten auch dort Stabilisierungsstäbe 12 vorgesehen werden.

Alle vorbeschriebenen Filterpackungen können sowohl zur Filterung von flüssigen als auch gasförmigen Medien verwendet werden.

## Patentansprüche

1. Filter zum Filtern von gasförmigen und flüssigen Medien, insbesondere Ölfilter für Verbrennungsmotoren, mit einem Filtergehäuse, das einen Zu- und einen Ablauf für das Medium aufweist, und mit einer in dem Filtergehäuse durch Stabilisierungselemente gehaltenen und fixierten porösen Filterpackung aus verformbarem Material, in die an einer Eintrittsfläche das zu filternde Medium eintreten und anschließend die Filterpackung durchströmen kann, dadurch gekennzeichnet, daß die Stabilisierungselemente (12) die Filterpackung (8) in Form und Lage im Filtergehäuse (2) derart fixieren, daß die Filterpackung (8) durch das strömende Medium im wesentlichen nur auf Zug belastet wird.

2. Filter nach Anspruch 1, dadurch gekennzeichnet, daß die Stabilisierungselemente (12) zumindest im Bereich der Eintrittsfläche (11) der Filterpackung (8) gelegen sind.

3. Filter nach Anspruch 2, dadurch gekennzeichnet, daß die Stabilisierungselemente (12) im Bereich der Eintrittsfläche (11) quer zur Strömungsrichtung angeordnet sind.

4. Filter nach Anspruch 3, dadurch gekennzeichnet, daß die Stabilisierungselemente (12) und die Filterpackung (8) quer zur Strömungsrichtung an der Eintrittsfläche angeordnet sind.

5. Filter nach einem der vorhergehenden Ansprüche, dadurch gekennzeichnet, daß die Stabilisierungselemente (12) über die Ränder der Filterpackung (8) hinausragen und an Anschlägen (13) in dem Filtergehäuse anliegen.

6. Filter nach einem der vorhergehenden Ansprüche, dadurch gekennzeichnet, daß die Filterpackung einen mittigen Kern (21) aufweist, mit dem die Stabilisierungselemente (12) verbunden sind.

7. Filter nach einem der vorhergehenden Ansprüche, dadurch gekennzeichnet, daß die Stabilisierungselemente (12) die Filterpackung (8) durchdringende Stäbe (12) sind.

8. Filter nach einem der vorhergehenden Ansprüche, dadurch gekennzeichnet, daß bei Filterpackungen (8) aus einer Vielzahl von Schichten aus porösem Blattmaterial die Stabilisierungselemente (12) sämtliche Schichten des Blattmateriales miteinander verbinden.

9. Filter nach einem der vorhergehenden Ansprüche, dadurch gekennzeichnet, daß die Filterpackung (8) einen mittigen hohlen Kern (21) aufweist, der im Innenbereich der Filterpackung (8) mit Öffnungen (22) versehen ist, und daß zumindest ein Ende des Kernes (21) offen ist.

10. Filter nach einem der vorhergehenden Ansprüche, dadurch gekennzeichnet, daß zumindest eine Außenfläche der Filterpackung (8) für das zu filternde Medium undurchlässig gemacht ist.

11. Filter nach Anspruch 11, dadurch gekennzeichnet, daß die zumindest eine Außenfläche der Filterpackung mit einer für das zu filternde Medium undurchlässigen Beschichtung (32) versehen ist.

12. Filter nach einem der vorhergehenden ansprüche, dadurch gekennzeichnet, daß die Filterpackung als Axial-, Radial-, oder Axial/Radial-Filtereinsatz mit Gleichstrom- oder Gegenstromprinzip verwendet wird.

13. Filter nach einem der vorhergehenden Ansprüche, dadurch gekennzeichnet, daß die Filterpackung (8) einen Stützkorb (31) aufweist, und daß dieser Stützkorb Halterung für eine geschäumte Füllung aus porösem Material ist.

14. Filter nach einem der vorhergehenden Ansprüche, dadurch gekennzeichent, daß die Filterpackung (8) zylindrisch ist, und daß die Stabilisierungselemente (12) quer zu den Mantellinien verlaufen.

15. Filter nach einem der vorhergehenden Ansprüche, dadurch gekennzeichnet, daß die Filterpackung (8) zylindrisch ist, und daß die Stabilisierungselemente längs Mantellinien des Zylinders verlaufen.

16. Filter nach einem der Ansprüche 1 bis 14, dadurch gekennzeichnet, daß die Filterpackung (8) die Form eines Quaders aufweist und die Stabilisierungselemente (12) zumindest an einer Seite des Quaders parallel zu dieser angeordnet sind.

17. Filter nach einem der vorhergehenden Ansprüche, dadurch gekennzeichnet, daß die Filterpackung (8) aus Bahnmaterial hergestellt ist, das quer zur Bahnlängsrichtung mit Stabilisierungselementen (12) versehen ist.

18. Filter nach Anspruch 18, dadurch gekennzeichnet, daß die Stabilisierungselemente (12) Materialverdickungen des Bahnmateriales sind.

19. Filter nach Anspruch 18, dadurch gekennzeichnet, daß die Stabilisierungselemente (12) flache Stege sind, die mit dem Bahnmaterial (34) verbunden sind.

## Claims

1. Filter for filtering gaseous and liquid media, in particular oil filters for internal combustion engines, having a filter housing which comprises an inlet and outlet for the medium, and having a porous filter packing which is made from a mouldable material and which is held and fixed in the filter housing by stabilising members, into which filter packing flows at one entry surface the medium to be filtered and subsequently the said medium can flow through the filter packing, characterised in that the stabilising members (12) fix the filter packing (8) in shape and position in the filter housing (2) in such a manner that the filter packing (8) is essentially only tensioned by the flowing medium.

2. Filter according to claim 1, characterised in that the stabilising members (12) lie at least in the region of the entry surface (11) of the filter packing (8).

3. Filter according to claim 2, characterised in that the stabilising members (12) are disposed in the region of the entry surface (11) transverse to the flow direction.

4. Filter according to claim 3, characterised in that the stabilising members (12) and the filter packing (8) are disposed at the entry surface transverse to the flow direction.

5. Filter according to any one of the preceding claims, characterised in that the stabilising members (12) protrude beyond the edges of the filter packing (8) and rest against the stops (13) in the filter housing.

6. Filter according to any one of the preceding claims, characterised in that the filter packing comprises a central core (21) by means of which the stabilising members (12) are connected.

7. Filter according to any one of the preceding claims, characterised in that the stabilising members (12) are rods (12) which penetrate the filter packing (8).

8. Filter according to any one of the preceding claims, characterised in that in the case of filter packing (8) which comprise a plurality of layers of porous sheet material the stabilising members (12) interconnect all layers of the sheet material.

9. Filter according to any one of the preceding claims, characterised in that the filter packing (8) comprises a central hollow core (21) which is provided with apertures (22) in the inner region of the filter packing (8) and that at least one end of the core (21) is open.

10. Filter according to any one of the preceding claims, characterised in that at least one outer surface of the filter packing (8) is made impermeable for the medium being filtered.

11. Filter according to claim 11, characterised in that at least one outer surface of the filter packing is provided with a coating (32) which is impermeable for the medium being filtered.

12. Filter according to any one of the preceding claims, characterised in that the filter packing is used as an axial, radial or axial/radial filter insert using the uniflow current principle or the reverse direction flow principle.

13. Filter according to any one of the preceding claims, characterised in that the filter packing (8) comprises a supporting basket (31) and that this supporting basket is a retaining device for a foamed filling made from porous material.

14. Filter according to any one of the preceding claims characterised in that the filter packing (8) is cylindrical and that the stabilising members (12) extend transverse to the peripheral lines.

15. Filter according to any one of the preceding claims, characterised in that the filter packing (8) is cylindrical and that the stabilising members extend along peripheral lines of the cylinder.

16. Filter according to any one of claims 1 to 14, characterised in that the filter packing (8) is cuboid in shape and the stabilising members (12) are disposed at least on one side of the cuboid and parallel thereto.

17. Filter according to any one of the preceding claims, characterised in that the filter packing (8) is manufactured from a web of material which is provided with stabilising members (12) transverse to the longitudinal direction of the web.

18. Filter according to claim 18, characterised in that the stabilising members (12) are thickened portions of the material of the web of material.

19. Filter according to claim 18, characterised in that the stabilising elements (12) are flat cross-pieces which are connected to the web of material (34).

## Revendications

1. Filtre pour filtrer des fluides gazeux ou liquides, en particulier filtre à huile de moteur thermique, comprenant un boîtier muni d'une entrée et d'une sortie de fluide et un élément de filtrage constitué d'un matériau déformable maintenu des le boîtier par des éléments de stabilisation, par une face d'entrée duquel le fluide à filtrer peut pénétrer et peut ensuite s'écouler à travers l'élément de filtrage, caractérisé en ce que les éléments de stabilisation (12) maintiennent la forme et la position de l'élément de filtrage (8) dans le boîtier (2) de manière que l'élément de filtrage (8) est essentiellement soumis à la traction par le flot de fluide.

2. Filtre selon la revendication l, caractérisé en ce que les éléments de stabilisation (12) sont disposés au moins au niveau de la face d'entrée (11) de l'élément de filtrage (8).

3. Filtre selon la revendication 2, caractérisé en ce que les éléments de stabilisation (12) sont disposés au niveau de la face d'entrée (11) transversalement à la direction d'écoulement.

4. Filtre selon la revendication 3, caractérisé en ce que les éléments de stabilisation (12) et l'élément de filtrage (8) sont disposés au niveau de la face d'entrée transversalement à la direction d'écoulement.

5. Filtre selon l'une quelconque des revendications précédentes, caractérisé en ce que les éléments de stabilisation (12) s'étendent au-delà des bords de l'élément de filtrage (8) et s'appuient sur des butées (13) du boîtier.

6. Filtre selon l'une quelconque des revendications précédentes, caractérisé en ce que l'élément de filtrage est muni d'un noyau central (21) auquel sont reliés les éléments de stabilisation (12).

7. Filtre selon l'une quelconque des revendications précédentes, caractérisé en ce que les éléments de stabilisation (12) sont des barres (12) traversent l'élément de filtrage (8).

8. Filtre selon l'une quelconque des revendications précédentes, caractérisé en ce que, lorsque l'élément de filtrage (8) est constitué d'une pluralité de couches de feuilles de matériau poreux, les éléments de stabilisation (12) relient entre eux les feuilles de matériau poreux.

9. Filtre selon l'une quelconque des revendications précédentes, caractérisé en ce que l'élément de filtrage (8) comprend un noyau creux central (21) qui est muni d'ouvertures (22) au niveau de l'intérieur de l'élément de filtrage (8), et en ce qu'au moins une extrémité du noyau (21) est ouverte.

10. Filtre selon l'une quelconque des revendications précédentes, caractérisé en ce qu'au moins une face externe de l'élément de filtrage (8) est imperméable au fluide à filtrer.

11. Filtre selon la revendication 10, caractérisé en ce qu'au moins une face externe de l'élément de filtrage est munie d'une couche (32) imperméable au fluide à filtrer.

12. Filtre selon l'une quelconque des revendications précédentes, caractérisé en ce que l'élément de filtrage est utilisé en tant qu'élément axial, radial, ou axial et radial selon le principe du contre-courant ou courant de même sens.

13. Filtre selon l'une quelconque des revendications précédentes, caractérisé en ce qu'élément de filtrage (8) est muni d'une corbeille de soutien (31) et en ce que cette corbeille constitue un contenant d'un matériau de remplissage poreux sous forme de mousse.

14. Filtre selon l' une quelconque des revendications précédentes, caractérisé en ce que l'élément de filtrage (8) est cylindrique et en ce que les éléments de stabilisation (12) s'étendent transversalement aux génératrices.

15. Filtre selon l'une quelconque des revendications précédentes, caractérisé en ce que l'élément de filtrage (8) est cylindrique et en ce que les éléments de stabilisation s'étendent selon les génératrices du cylindre.

16. Filtre selon l'une des revendications 1 à 14, caractérisé en ce que l'élément de filtrage (8) est de forme parallélépipédique et en ce que les éléments de stabilisation (12) sont disposés au moins au niveau d'une face du parallélépipède, parallèlement à celle-ci.

17. Filtre selon l'une quelconque des revendications précédentes, caractérisé en ce que l'élément de filtrage (8) est réalisé en matériau en bande qui est muni d'éléments de stabilisation (12) transversalement au sens longitudinal des bandes.

18. Filtre selon la revendication 17, caractérisé en ce que les éléments de stabilisation (12) sont constitués d'épaississements du matériau en bande.

19. Filtre selon la revendication 17, caractérisé en ce que les éléments de stabilisation (12) sont des entretoises planes qui sont reliées au matériau en bande (34).
